# EUROPÄISCHE PATENTSCHRIFT

(11) **EP 3 732 449 B1**
(45) Veröffentlichungstag und Bekanntmachung des Hinweises auf die Patenterteilung: **03.01.2024**
(21) Anmeldenummer: 18825617.6
(22) Anmeldetag: 13.12.2018
(51) Int. Cl.: G01F 23/26, G01F 23/263

(54) **BETRIEBSFLÜSSIGKEITSBEHÄLTER MIT INTEGRIERTEM SYSTEM ZUR ERFASSUNG DES FÜLLSTANDES**
OPERATING LIQUID CONTAINER COMPRISING A BUILT-IN SYSTEM FOR DETECTING THE FILLING LEVEL
RÉSERVOIR DE LIQUIDE COMPRENANT UN SYSTÈME INTÉGRÉ POUR LA DÉTECTION DU NIVEAU DE REMPLISSAGE

(30) Priorität: 28.12.2017 DE 102017223855
(43) Veröffentlichungstag der Anmeldung: 04.11.2020
(73) Patentinhaber: Kautex Textron GmbH & Co. KG, 53229 Bonn (DE)
(72) Erfinder: KRIEGER, Karl-Ludwig, 26835 Brinkum (DE); HAPPEL, Jakob, 29614 Soldau (DE); WOLF, Hartmut, 53639 Königswinter (DE)
(74) Vertreter: Richly & Ritschel Patentanwälte PartG mbB
(86) Internationale Anmeldenummer: PCT/EP2018/084747
(87) Internationale Veröffentlichungsnummer: WO 2019/129501

(56) Entgegenhaltungen:
- WO-A1-2006/029427
- DE-A1- 4 131 582
- DE-A1-102005 022 933
- DE-A1-102005 022 933
- US-A- 4 730 490
- US-A- 5 050 431
- US-B1- 6 431 670
- US-B1- 6 431 670

## Beschreibung

Die vorliegende Erfindung betrifft einen Betriebsflüssigkeitsbehälter mit einem Messsystem zur Bestimmung eines Füllgrades des Betriebsflüssigkeitsbehälters.

Im Folgenden wird auch auf als Harnstoffbehälter ausgebildete Betriebsflüssigkeitsbehälter Bezug genommen, die für den Einsatz in einem Kraftfahrzeug ausgebildet sind. Betriebsflüssigkeitsbehälter im Sinne der Erfindung sind insbesondere aber nicht ausschließlich Harnstoffbehälter für Kraftfahrzeuge, Wasserbehälter zur Bevorratung von in Brennräume einer Brennkraftmaschine zu injizierendes Wasser, Wischwasserbehälter, Kraftstoffbehälter (für Ottokraftstoffe oder Dieselkraftstoffe), Ölbehälter, Nebenflüssigkeitsbehälter oder Additivbehälter für Kraftfahrzeuge. Behälter der eingangs genannten Art werden häufig durch Extrusionsblasformen hergestellt, wobei sich insbesondere HDPE (High Density Polyethylene) für die Herstellung extrusionsblasgeformter Behälter eignet. Ferner ist es möglich, entsprechende Betriebsflüssigkeitsbehälter mittels eines Spritzgießverfahrens herzustellen.

US 5 050 431 A beschreibt eine Flüssigkeitspegelmessvorrichtung zur Bestimmung des Pegels einer Flüssigkeit in einer Flüssigkeitsbegrenzungseinheit, Verfahren zur Herstellung und zum Betrieb der Vorrichtung und eine Waschmaschine, die die Vorrichtung verwendet, werden bereitgestellt, wobei die Vorrichtung ein Paar Elektrodenplatten umfasst, die in einer beabstandeten Beziehung angeordnet sind, um so angepasst zu sein, dass sie sich in einer bestimmten Position relativ zu der Begrenzungseinheit befinden, und gegenüberliegende Enden aufweisen, eine elektrische Schaltung, die mit den Elektrodenplatten verbunden ist, um daraus ein Spannungssignal zu erzeugen, das sich in Abhängigkeit vom Pegel der Flüssigkeit in der Begrenzungseinheit relativ zu den Elektrodenplatten ändert, eine Steuerung zum Bestimmen des tatsächlichen Pegels der Flüssigkeit aus dem Signal, und eine dritte Elektrodenplatte, die in einem Abstand zu dem Paar Elektrodenplatten angeordnet ist und mit einer des Paars Elektrodenplatten zusammenwirken kann, um ein Referenzspannungssignal zum Bestimmen der elektrolytischen Basis der Flüssigkeit zu erzeugen.

Aus dem Stand der Technik sind Betriebsflüssigkeitsbehälter bekannt, deren Füllstande mittels Hebelgebern ermittelt werden, die jeweils einen auf der Betriebsflüssigkeit aufschwimmenden Schwimmkörper aufweisen. Entsprechende Hebelgeber sind störanfällig, insbesondere, wenn diese in Betriebsflüssigkeitsbehältern eingesetzt werden, die zur Aufnahme einer wässrigen Lösung ausgebildet sind. So friert wässrige Harnstofflösung, die zur Entstickung von Abgasen in den Abgasstrang injiziert wird, bei einer Temperatur unterhalb von -11°C ein. Somit können im Fahrbetrieb Eisbrocken gegen den Hebelgeber und dessen Bauteile prallen und diese beschädigen.

Um dieses Problem zu lösen, sind aus dem Stand der Technik kapazitive Füllstandsensoren bekannt, mittels denen der Füllstand eines Betriebsflüssigkeitsbehälters berührungslos mittels Kondensatoren bestimmbar ist. So beschreibt die DE 10 2010 011 638 A1 einen kapazitiven Füllstandsensor, der eine erste und eine zweite langgestreckte Levelelektrode aufweist, die jeweils an einer Außenseite eines Flüssigkeitsbehälters in einer ersten Richtung parallel zueinander angeordnet sind, in der sich ein Füllstand des Flüssigkeitsbehälters ändert. Ferner weist der Füllstandsensor eine erste und eine zweite langgestreckte Referenzelektrode auf, die in einer zweiten Richtung parallel zueinander an der Außenseite des Flüssigkeitsbehälters angeordnet sind, wobei die zweite Richtung entlang eines Bodens des Flüssigkeitsbehälters verläuft. Der in der DE 10 2010 011 638 A1 beschriebene kapazitive Füllstandsensor weist ferner eine Auswerteeinheit auf, die mit den zwei Levelelektroden und mit den zwei Referenzelektroden verbunden ist, und die zur Ermittlung eines Füllstandes einer Flüssigkeit in einem Inneren des Flüssigkeitsbehälters mittels Signalen von den Levelelektroden ausgebildet ist. DE 10 2005 022933 A1 beschreibt ein Messsystem zur Messung des Füllstandes einer sich in einem Behälter befindlichen Flüssigkeit und Fahrzeugflüssigkeitsbehälter. US5050431 beschreibt ein Messsystem für die Flüssigkeitsstandmessung in einer Waschmaschine. US 2998559 beschreibt ein Messsystem für die Flüssigkeitsstandmessung in einem Behälter.

Der vorliegenden Erfindung liegt die Aufgabe zugrunde, einen Betriebsflüssigkeitsbehälter mit einem Füllstanderfassungssystem bereitzustellen, das eine verbesserte Genauigkeit hinsichtlich der Bestimmung des Füllstandes des Betriebsflüssigkeitsbehälters aufweist.

Die der vorliegenden Erfindung zugrundeliegende Aufgabe wird durch einen Betriebsflüssigkeitsbehälter mit den Merkmalen des Anspruchs 1 gelöst. Vorteilhafte Ausgestaltungen des Betriebsflüssigkeitsbehälters sind in den von Anspruch 1 abhängigen Ansprüchen beschrieben.

Im Genaueren wird die der vorliegenden Erfindung zugrundeliegende Aufgabe durch einen Betriebsflüssigkeitsbehälter gelöst, dessen Betriebsflüssigkeitsbehälterinnenraum von einer Deckenwand, einer Bodenwand und einer die Bodenwand mit der Deckenwand verbindenden Seitenwand begrenzt ist, wobei der Betriebsflüssigkeitsbehälter einen Referenzkondensator mit einer ersten Elektrode und einer zweiten Elektrode aufweist, die jeweils parallel zur Bodenwand verlaufen. Der Betriebsflüssigkeitsbehälter weist ferner einen Messkondensator mit einer ersten Elektrode und einer zweiten Elektrode auf, die jeweils eine Längserstreckung, eine Breitenerstreckung und eine Tiefenerstreckung aufweisen und jeweils derart parallel zur Seitenwand verlaufen, dass die Längserstreckungen der ersten Elektrode und der zweiten Elektrode von der Bodenwand in Richtung der Deckenwand verlaufen. Ferner weist der Betriebsflüssigkeitsbehälter eine mit dem Referenzkondensator und dem Messkondensator elektrisch verbundene Auswerteeinrichtung zur Bestimmung eines Füllstandes des Betriebsflüssigkeitsbehälters mittels von dem Referenzkondensator und dem Messkondensator ermittelten Messsignalen auf. Der erfindungsgemäße Betriebsflüssigkeitsbehälter aufweist, dass die erste Elektrode und die zweite Elektrode des Referenzkondensators in der Bodenwand und die erste Elektrode und die zweite Elektrode des Messkondensators in der Seitenwand eingebettet sind. Der erfindungsgemässe Betriebsflüssigkeitsbehälter ist durch die folgenden Merkmale gekennzeichnet : die Bodenwand weist eine sich in den Betriebsflüssigkeitsbehälterinnenraum erstreckende Erhebung auf, und die erste Elektrode und die zweite Elektrode des Referenzkondensators sind in der Erhebung der Bodenwand befestigt.

Der erfindungsgemäße Betriebsflüssigkeitsbehälter weist eine erhöhte Bestimmungsgenauigkeit hinsichtlich der Ermittlung dessen Füllstandes auf. Denn aufgrund der Einbettung des Referenzkondensators in die Bodenwand des Betriebsflüssigkeitsbehälters weisen die erste Elektrode und die zweite Elektrode des Referenzkondensators einen verminderten Abstand zum Betriebsflüssigkeitsbehälterinnenraum und somit zu der im Betriebsflüssigkeitsbehälterinnenraum befindlichen Betriebsflüssigkeit auf. Daher wechselwirkt ein zwischen der ersten Elektrode und der zweiten Elektrode des Referenzkondensators befindliches elektrisches Feld weniger mit dem Material der Bodenwand und mehr mit der im Betriebsflüssigkeitsbehälterinnenraum befindlichen Betriebsflüssigkeit. Da der Referenzkondensator zu jedem Betriebszeitpunkt in unmittelbarer Nähe der Betriebsflüssigkeit ist, ist die gemessene Kapazität des Referenzkondensators nicht vom Füllstand abhängig. Somit kann, bei bekannter Elektrodengeometrie die dielektrische Leitfähigkeit der Betriebsflüssigkeit im Betriebsflüssigkeitsbehälterinnenraum direkt aus der Kapazität des Referenzkondensators bestimmt werden. Denn der Referenzkondensator ist zur Bestimmung der dielektrischen Leitfähigkeit der sich im Betriebsflüssigkeitsbehälterinnenraum befindlichen Betriebsflüssigkeit ausgebildet.

Die so ermittelte dielektrische Leitfähigkeit der Betriebsflüssigkeit wird durch die Auswerteeinrichtung zur Bestimmung des Füllstandes aus der Kapazität des Messkondensators verwendet. Die Kapazität des Messkondensators ist auch von der dielektrischen Leitfähigkeit des Mediums abhängig, in dem sich das elektrische Feld zwischen der ersten Elektrode und der zweiten Elektrode des Messkondensators ausbreitet. Wenn die dielektrische Leitfähigkeit der Betriebsflüssigkeit mit einer hohen Genauigkeit bestimmt ist, kann folglich aus der Kapazität des Messkondensators der Füllstand mit einer erhöhten Genauigkeit bestimmt werden. Die Kapazität des Messkondensators hängt ferner von dem Füllstand des Betriebsflüssigkeitsbehälters ab. Denn umso höher der Füllstand ist, desto mehr Betriebsflüssigkeit wird von dem elektrischen Feld zwischen der ersten Elektrode und der zweiten Elektrode des Messkondensators durchdrungen.

Da auch die erste Elektrode und die zweite Elektrode des Messkondensators in der Seitenwand des Betriebsflüssigkeitsbehälters eingebettet sind, ist der Einfluss des Materials der Seitenwand auf die Kapazität des Messkondensators vermindert und der Einfluss der Betriebsflüssigkeit im Betriebsflüssigkeitsbehälterinnenraum auf die Kapazität des Messkondensators vergrößert. Daher lässt sich der Füllstand des Betriebsflüssigkeitsbehälters mit einer erhöhten Genauigkeit bestimmen. Aufgrund der Einbettung des Referenzkondensators in die Bodenwand ist dieser von der Bodenwand umschlossen. Aufgrund der Einbettung des Messkondensators in die Seitenwand ist dieser von der Seitenwand umschlossen.

Ein weiterer Vorteil der Einbettung des Referenzkondensators in die Bodenwand und des Messkondensators in die Seitenwand ist, dass sowohl der Referenzkondensator als auch der Messkondensator mechanisch und chemisch geschützt sind, so dass der erfindungsgemäße Betriebsflüssigkeitsbehälter eine erhöhte Langzeitstabilität aufweist.

Die ersten und zweiten Elektroden des Referenzkondensators sind einander derart gegenüberliegend angeordnet, dass sich die entlang deren Tiefenerstreckung erstreckenden Seitenkanten gegenüberstehen. Auch die ersten und zweiten Elektroden des Messkondensators sind einander derart gegenüberliegend angeordnet, dass sich die entlang deren Tiefenerstreckung erstreckenden Seitenkanten gegenüberstehen.

Der Betriebsflüssigkeitsbehälter ist insbesondere als Betriebsflüssigkeitsbehälter für ein Kraftfahrzeug ausgebildet.

Die Seitenwand ist vorzugsweise umlaufend ausgebildet.

Die dielektrische Leitfähigkeit der Betriebsflüssigkeit kann auch als Permittivität der Betriebsflüssigkeit bezeichnet werden.

Die Auswerteeinrichtung ist als elektronische Auswerteeinrichtung ausgebildet.

Da die Kapazität des Referenzkondensators auch von der dielektrischen Leitfähigkeit der Betriebsflüssigkeit im Betriebsflüssigkeitsbehälterinnenraum abhängt, ist die Auswerteeinrichtung dazu ausgebildet, mittels des Referenzkondensators die dielektrische Leitfähigkeit der Betriebsflüssigkeit zu bestimmen.

Der Betriebsflüssigkeitsbehälter ist derart ausgebildet, dass die Bodenwand eine sich in den Betriebsflüssigkeitsbehälterinnenraum erstreckende Erhebung aufweist, wobei die erste Elektrode und die zweite Elektrode des Referenzkondensators in der Erhebung eingebettet sind.

Durch eine entsprechende Ausbildung des Betriebsflüssigkeitsbehälters ist die Bestimmung der dielektrischen Leitfähigkeit der Betriebsflüssigkeit mit einer nochmals erhöhten Genauigkeit ermöglicht, da eventuelle Ablagerungen im Bereich der Bodenwand einen verminderten Einfluss auf die Bestimmung der dielektrischen Leitfähigkeit der sich im Betriebsflüssigkeitsbehälterinnenraum befindlichen Betriebsflüssigkeit haben.

Die Erhebung der Bodenwand ist vorzugsweise als Einstülpung in den Betriebsflüssigkeitsbehälterinnenraum ausgebildet.

Die Erhebung ist vorzugsweise zwischen 2mm und 10mm von der umgebenden Innenfläche der Bodenwand abgehoben. Weiter vorzugsweise ist die Erhebung zwischen 3mm und 8mm von der umgebenden Innenfläche der Bodenwand abgehoben.

Weiter vorzugsweise ist der Betriebsflüssigkeitsbehälter derart ausgebildet, dass zumindest eine der ersten und zweiten Elektroden des Messkondensators entlang ihrer Längserstreckung eine ungleichmäßige Breitenerstreckung aufweist.

Der entsprechend ausgebildete Betriebsflüssigkeitsbehälter weist den Vorteil auf, dass die Messgenauigkeit des Füllstands mittels des Messkondensators in den Bereichen des Betriebsflüssigkeitsbehälters erhöht werden kann, in denen es auf eine hohe Genauigkeit ankommt. Umso breiter die Elektroden sind, desto tiefer dringt das elektrische Feld in den Betriebsflüssigkeitsbehälterinnenraum und in die sich in diesem befindliche Betriebsflüssigkeit ein, so dass die Betriebsflüssigkeit einen größeren Einfluss auf die Kapazität des Messkondensators hat.

Im Genaueren wird die der vorliegenden Erfindung zugrundeliegende Aufgabe durch einen Betriebsflüssigkeitsbehälter gelöst, dessen Betriebsflüssigkeitsbehälterinnenraum von einer Deckenwand, einer Bodenwand und einer die Bodenwand mit der Deckenwand verbindenden Seitenwand begrenzt ist, wobei der Betriebsflüssigkeitsbehälter einen Referenzkondensator mit einer ersten Elektrode und einer zweiten Elektrode aufweist, die jeweils parallel zur Bodenwand verlaufen. Der Betriebsflüssigkeitsbehälter weist ferner einen Messkondensator mit einer ersten Elektrode und einer zweiten Elektrode auf, die jeweils eine Längserstreckung, eine Breitenerstreckung und eine Tiefenerstreckung aufweisen und jeweils derart parallel zur Seitenwand verlaufen, dass die Längserstreckungen der ersten Elektrode und der zweiten Elektrode von der Bodenwand in Richtung der Deckenwand verlaufen. Ferner weist der Betriebsflüssigkeitsbehälter eine mit dem Referenzkondensator und dem Messkondensator elektrisch verbundene Auswerteeinrichtung zur Bestimmung eines Füllstandes des Betriebsflüssigkeitsbehälters mittels von dem Referenzkondensator und dem Messkondensator ermittelten Messsignalen auf. Der erfindungsgemäße Betriebsflüssigkeitsbehälter ist dadurch gekennzeichnet, dass die Bodenwand eine sich in den Betriebsflüssigkeitsbehälterinnenraum erstreckende Erhebung aufweist, wobei die erste Elektrode und die zweite Elektrode des Referenzkondensators an der Bodenwand im Bereich deren Erhebung befestigt sind.

Der erfindungsgemäße Betriebsflüssigkeitsbehälter weist eine erhöhte Bestimmungsgenauigkeit hinsichtlich der Ermittlung dessen Füllstandes auf, da eventuelle Ablagerungen im Bereich der Bodenwand einen verminderten Einfluss auf die Bestimmung der dielektrischen Leitfähigkeit der sich im Betriebsflüssigkeitsbehälterinnenraum befindlichen Betriebsflüssigkeit haben.

Da der Referenzkondensator zu jedem Betriebszeitpunkt in unmittelbarer Nähe der Betriebsflüssigkeit ist, ist die gemessene Kapazität des Referenzkondensators nicht vom Füllstand abhängig. Somit kann, bei bekannter Elektrodengeometrie die dielektrische Leitfähigkeit der Betriebsflüssigkeit im Betriebsflüssigkeitsbehälterinnenraum direkt aus der Kapazität des Referenzkondensators bestimmt werden. Denn der Referenzkondensator ist zur Bestimmung der dielektrischen Leitfähigkeit der sich im Betriebsflüssigkeitsbehälterinnenraum befindlichen Betriebsflüssigkeit ausgebildet.

Die so ermittelte dielektrische Leitfähigkeit der Betriebsflüssigkeit wird durch die Auswerteeinrichtung zur Bestimmung des Füllstandes aus der Kapazität des Messkondensators verwendet. Die Kapazität des Messkondensators ist auch von der dielektrischen Leitfähigkeit des Mediums abhängig, in dem sich das elektrische Feld zwischen der ersten Elektrode und der zweiten Elektrode des Messkondensators ausbreitet. Wenn die dielektrische Leitfähigkeit der Betriebsflüssigkeit mit einer hohen Genauigkeit bestimmt ist, kann folglich aus der Kapazität des Messkondensators der Füllstand mit einer erhöhten Genauigkeit bestimmt werden. Die Kapazität des Messkondensators hängt ferner von dem Füllstand des Betriebsflüssigkeitsbehälters ab. Denn umso höher der Füllstand ist, desto mehr Betriebsflüssigkeit wird von dem elektrischen Feld zwischen der ersten Elektrode und der zweiten Elektrode des Messkondensators durchdrungen.

Die ersten und zweiten Elektroden des Referenzkondensators sind einander derart gegenüberliegend angeordnet, dass sich die entlang deren Tiefenerstreckung erstreckenden Seitenkanten gegenüberstehen. Auch die ersten und zweiten Elektroden des Messkondensators sind einander derart gegenüberliegend angeordnet, dass sich die entlang deren Tiefenerstreckung erstreckenden Seitenkanten gegenüberstehen.

Die Erhebung der Bodenwand ist vorzugsweise als Einstülpung in den Betriebsflüssigkeitsbehälterinnenraum ausgebildet.

Die Erhebung ist vorzugsweise zwischen 2mm und 10mm von der umgebenden Innenfläche der Bodenwand abgehoben. Weiter vorzugsweise ist die Erhebung zwischen 3mm und 8mm von der umgebenden Innenfläche der Bodenwand abgehoben.

Der Referenzkondensator ist vorzugsweise an der Außenseite der Bodenwand befestigt. Der Messkondensator ist vorzugsweise an der Außenseite der Seitenwand befestigt.

Der Betriebsflüssigkeitsbehälter ist insbesondere als Betriebsflüssigkeitsbehälter für ein Kraftfahrzeug ausgebildet.

Die Seitenwand ist vorzugsweise umlaufend ausgebildet.

Die dielektrische Leitfähigkeit der Betriebsflüssigkeit kann auch als Permittivität der Betriebsflüssigkeit bezeichnet werden.

Die Auswerteeinrichtung ist als elektronische Auswerteeinrichtung ausgebildet.

Da die Kapazität des Referenzkondensators auch von der dielektrischen Leitfähigkeit der Betriebsflüssigkeit im Betriebsflüssigkeitsbehälterinnenraum abhängt, ist die Auswerteeinrichtung dazu ausgebildet, mittels des Referenzkondensators die dielektrische Leitfähigkeit der Betriebsflüssigkeit zu bestimmen.

Weiter vorzugsweise ist der Betriebsflüssigkeitsbehälter derart ausgebildet, dass zumindest eine der ersten und zweiten Elektroden des Messkondensators entlang ihrer Längserstreckung eine ungleichmäßige Breitenerstreckung aufweist.

Der entsprechend ausgebildete Betriebsflüssigkeitsbehälter weist den Vorteil auf, dass die Messgenauigkeit des Füllstands mittels des Messkondensators in den Bereichen des Betriebsflüssigkeitsbehälters erhöht werden kann, in denen es auf eine hohe Genauigkeit ankommt. Umso breiter die Elektroden sind, desto tiefer dringt das elektrische Feld in den Betriebsflüssigkeitsbehälterinnenraum und in die sich in diesem befindliche Betriebsflüssigkeit ein, so dass die Betriebsflüssigkeit einen größeren Einfluss auf die Kapazität des Messkondensators hat.

Weiter vorzugsweise ist der Betriebsflüssigkeitsbehälter derart ausgebildet, dass die erste Elektrode und die zweite Elektrode des Referenzkondensators in der Bodenwand und die erste Elektrode und die zweite Elektrode des Messkondensators in der Seitenwand eingebettet sind.

Der entsprechend ausgebildete Betriebsflüssigkeitsbehälter weist eine erhöhte Bestimmungsgenauigkeit hinsichtlich der Ermittlung dessen Füllstandes auf. Denn aufgrund der Einbettung des Referenzkondensators in die Bodenwand des Betriebsflüssigkeitsbehälters weisen die erste Elektrode und die zweite Elektrode des Referenzkondensators einen verminderten Abstand zum Betriebsflüssigkeitsbehälterinnenraum und somit zu der im Betriebsflüssigkeitsbehälterinnenraum befindlichen Betriebsflüssigkeit auf. Daher wechselwirkt ein zwischen der ersten Elektrode und der zweiten Elektrode des Referenzkondensators befindliches elektrisches Feld weniger mit dem Material der Bodenwand und mehr mit der im Betriebsflüssigkeitsbehälterinnenraum befindlichen Betriebsflüssigkeit.

Da auch die erste Elektrode und die zweite Elektrode des Messkondensators in der Seitenwand des Betriebsflüssigkeitsbehälters eingebettet sind, ist der Einfluss des Materials der Seitenwand auf die Kapazität des Messkondensators vermindert und der Einfluss der Betriebsflüssigkeit im Betriebsflüssigkeitsbehälterinnenraum auf die Kapazität des Messkondensators vergrößert. Daher lässt sich der Füllstand des Betriebsflüssigkeitsbehälters mit einer erhöhten Genauigkeit bestimmen. Aufgrund der Einbettung des Referenzkondensators in die Bodenwand ist dieser von der Bodenwand umschlossen. Aufgrund der Einbettung des Messkondensators in die Seitenwand ist dieser von der Seitenwand umschlossen.

Ein weiterer Vorteil der Einbettung des Referenzkondensators in die Bodenwand und des Messkondensators in die Seitenwand ist, dass sowohl der Referenzkondensator als auch der Messkondensator mechanisch und chemisch geschützt sind, so dass der erfindungsgemäße Betriebsflüssigkeitsbehälter eine erhöhte Langzeitstabilität aufweist.

Weitere Vorteile, Einzelheiten und Merkmale der Erfindung ergeben sich nachfolgend aus den erläuterten Ausführungsbeispielen. Dabei zeigen im Einzelnen:
- Figur 1:: eine stark vereinfachte räumliche Darstellung eines erfindungsgemäßen Betriebsflüssigkeitsbehälters;
- Figur 2:: eine stark vereinfachte Darstellung einer Schichtstruktur der Bodenwand und/oder der Seitenwand des Betriebsflüssigkeitsbehälters gemäß einer weiteren Ausführungsform der vorliegenden Erfindung; und
- Figuren 3A bis 3C:: Beispiele von Messkondensatoren in Alleinstellung in seitlicher Draufsicht von Betriebsflüssigkeitsbehältern unterschiedlicher Ausführungsformen der vorliegenden Erfindung.

In der nun folgenden Beschreibung bezeichnen gleiche Bezugszeichen gleiche Bauteile bzw. gleiche Merkmale, sodass eine in Bezug auf eine Figur durchgeführte Beschreibung bezüglich eines Bauteils auch für die anderen Figuren gilt, sodass eine wiederholende Beschreibung vermieden wird. Ferner sind einzelne Merkmale, die in Zusammenhang mit einer Ausführungsform beschrieben wurden, auch separat in anderen Ausführungsformen verwendbar.

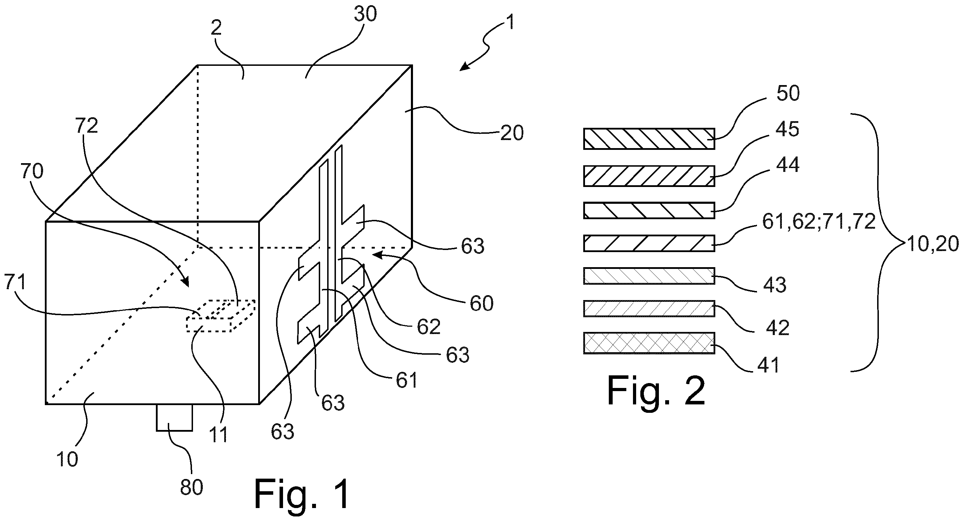

Figur 1 zeigt eine stark vereinfachte räumliche Darstellung eines erfindungsgemäßen Betriebsflüssigkeitsbehälters 1. Ein Betriebsflüssigkeitsbehälterinnenraum 2 ist durch eine Deckenwand 30, eine Bodenwand 10 und eine die Bodenwand 10 mit der Deckenwand 30 verbindende Seitenwand 20 begrenzt. Aus Figur 1 ist ersichtlich, dass die Seitenwand 20 umlaufend ausgebildet ist.

Der erfindungsgemäße Betriebsflüssigkeitsbehälter 1 weist einen Referenzkondensator 70 auf, der eine erste Elektrode 71 und eine zweite Elektrode 72 aufweist. Die erste Elektrode 71 und die zweite Elektrode 72 verlaufen parallel zur Bodenwand 10.

Wie aus Figur 1 ersichtlich ist, weist die Bodenwand 10 eine sich in den Betriebsflüssigkeitsbehälterinnenraum 2 erstreckende Erhebung 11 auf. Der Referenzkondensator 70 ist in der Bodenwand 10 derart eingebettet, dass die erste Elektrode 71 und die zweite Elektrode 72 des Referenzkondensators 70 in der Erhebung 11 der Bodenwand 10 eingebettet sind. Folglich stehen die erste Elektrode 71 und die zweite Elektrode 72 des Referenzkondensators 70 nicht mit der Betriebsflüssigkeit 50 in direktem Kontakt. Ferner stehen die erste Elektrode 71 und die zweite Elektrode 72 des Referenzkondensators 70 auch nicht mit der Umgebung des Betriebsflüssigkeitsbehälters 1 in direktem Kontakt. Durch die Einbettung der ersten Elektrode 71 und der zweiten Elektrode 72 in der Erhebung 11 der Bodenwand 10 wirken sich eventuelle Ablagerungen auf der Bodenwand 10 vermindert auf die Bestimmung der dielektrischen Leitfähigkeit der sich im Betriebsflüssigkeitsbehälterinnenraum 2 befindlichen Betriebsflüssigkeit 50 aus.

Hinsichtlich der Einbettung des Referenzkondensators 70 in die Bodenwand 10 bzw. in die Erhebung 11 der Bodenwand 10 wird auf Figur 2 verwiesen, die weiter unten beschrieben wird.

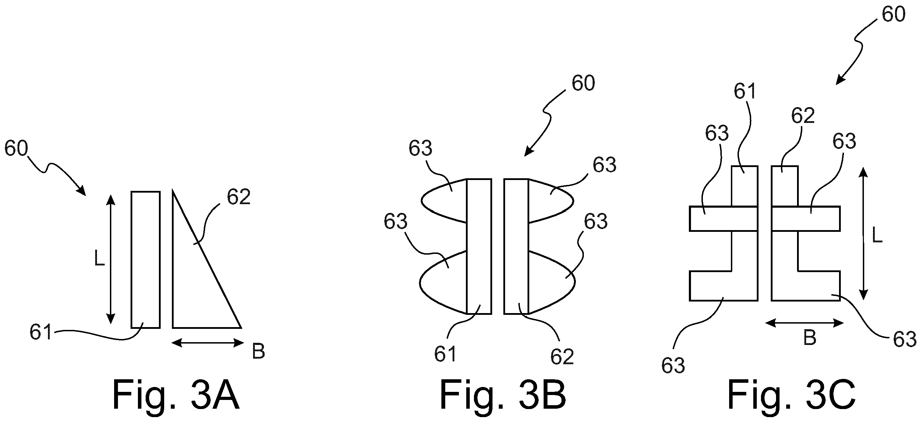

Aus Figur 1 ist ferner ersichtlich, dass der erfindungsgemäße Betriebsflüssigkeitsbehälter 1 auch einen Messkondensator 60 aufweist, der wiederum eine erste Elektrode 61 und eine zweite Elektrode 62 aufweist. Sowohl die erste Elektrode 61 als auch die zweite Elektrode 62 weisen jeweils eine Längserstreckung L, eine Breitenerstreckung B und eine Tiefenerstreckung auf (siehe Figuren 3A bis 3C). Die erste Elektrode 61 und die zweite Elektrode 62 sind dabei jeweils derart parallel zur Seitenwand 20 verlaufend angeordnet, dass die Längserstreckungen L der ersten Elektrode 61 und der zweiten Elektrode 62 von der Bodenwand 10 in Richtung der Deckenwand 30 verlaufen.

Der Messkondensator 60 ist in die Seitenwand 20 eingebettet, so dass die erste Elektrode 61 und die zweite Elektrode 62 des Messkondensators 70 in der Seitenwand 20 eingebettet sind. Folglich stehen die erste Elektrode 61 und die zweite Elektrode 62 des Messkondensators 60 nicht mit der Betriebsflüssigkeit 50 in direktem Kontakt. Ferner stehen die erste Elektrode 61 und die zweite Elektrode 62 des Messkondensators 60 auch nicht mit der Umgebung des Betriebsflüssigkeitsbehälters 1 in direktem Kontakt. Hinsichtlich der Einbettung des Messkondensators 60 in die Seitenwand 20 wird auf Figur 2 verwiesen, die weiter unten beschrieben wird.

Die vorliegende Erfindung ist jedoch nicht darauf beschränkt, dass der Messkondensator 60 in der Seitenwand 20 und der Referenzkondensator 70 in der Bodenwand 10 eingebettet sind. Der Messkondensator 60 kann auch an einer Außenseite der Seitenwand 20 befestigt sein. Ferner kann der Referenzkondensator 70 an einer Außenseite der Bodenwand 10 befestigt sein.

Aus Figur 1 ist ersichtlich, dass die erste Elektrode 61 und die zweite Elektrode 62 des Messkondensators 60 jeweils zwei Flügel 63 aufweisen, die parallel zur Breitenerstreckung B der Elektroden 61, 62 verlaufen. Die jeweiligen Flügel 63 sind dabei in unterschiedlichen Höhen der ersten und zweiten Elektroden 61, 62 ausgebildet, sodass die Flügel 63 in unterschiedlichen Höhen des Betriebsflüssigkeitsbehälters 1 angeordnet sind. Somit weisen die ersten und zweiten Elektroden 61, 62 des Messkondensators 60 entlang ihrer Längserstreckung L eine ungleichmäßige Breitenerstreckung B auf. Die vorliegende Erfindung ist jedoch nicht auf eine entsprechende Ausgestaltung der ersten und zweiten Elektroden 61, 62 des Messkondensators 60 beschränkt. Beispielsweise können die ersten und zweiten Elektroden 61, 62 des Messkondensators 60 über ihrer Längserstreckungen L auch eine gleichmäßige Breitenerstreckung B aufweisen.

Der Betriebsflüssigkeitsbehälter 1 weist ferner eine elektronische Auswerteeinrichtung 80 auf, die mit dem Referenzkondensator 70 und dem Messkondensator 60 elektrisch verbunden ist. Die elektrische Verbindung der Auswerteeinrichtung 80 mit dem Referenzkondensator 70 und dem Messkondensator 60 erfolgt über in Figur 1 nicht dargestellte elektrische Leitungen.

Die Auswerteeinrichtung 80 ist dazu ausgebildet, an die erste Elektrode 61 des Messkondensators 60 eine Wechselspannung anzulegen und aus der ermittelten Kapazität des Messkondensators 60 den Füllstand des Betriebsflüssigkeitsbehälters 1 zu bestimmen. Die Kapazität des Messkondensators 60 ist von dessen Geometrie, dessen Abmessungen und der dielektrischen Leitfähigkeit des Mediums, in dem das elektrische Feld zwischen der ersten Elektrode 61 und der zweiten Elektrode 62 anliegt, abhängig. Da die dielektrische Leitfähigkeit der Betriebsflüssigkeit mittels des Referenzkondensators 70 bestimmt wird, kann über die Kapazität des Messkondensators 60 der Füllstand des Betriebsflüssigkeitsbehälters 1 ermittelt werden.

Da die Kapazität des Referenzkondensators 70 auch von der dielektrischen Leitfähigkeit der Betriebsflüssigkeit 50 im Betriebsflüssigkeitsbehälterinnenraum 2 abhängig ist, ist die Auswerteeinrichtung 80 dazu ausgebildet, mittels des Referenzkondensators 70 die dielektrische Leitfähigkeit der Betriebsflüssigkeit zu bestimmen.

Figur 2 zeigt eine stark vereinfachte Darstellung einer Schichtstruktur der Bodenwand 10 und/oder der Seitenwand 20 des Betriebsflüssigkeitsbehälters 1. Es ist ersichtlich, dass die Bodenwand 10 und/oder die Seitenwand 20 mehrschichtig aufgebaut ist/sind.

Es ist ersichtlich, dass die Bodenwand 10 eine Außenschicht 41, eine dem Betriebsflüssigkeitsbehälterinnenraum 2 zugewandte Innenschicht 45 und eine zwischen die Außenschicht 41 und die Innenschicht 45 angeordnete Haftschicht 44 aufweist. Die erste Elektrode 71 und die zweite Elektrode 72 des Referenzkondensators 70 sind zwischen der Außenschicht 41 und der Haftschicht 44 angeordnet. Die Bodenwand 10 weist ferner eine Abschirmschicht 42 und eine Isolationsschicht 43 auf, wobei die Abschirmschicht 42 zwischen der Außenschicht 41 und den ersten und zweiten Elektroden 71, 72 des Referenzkondensators 70 angeordnet ist. Die Isolationsschicht 43 wiederum ist zwischen der Abschirmschicht 42 und den ersten und zweiten Elektroden 71, 72 des Referenzkondensators 70 angeordnet.

Es ist ferner ersichtlich, dass die Seitenwand 20 eine Außenschicht 41, eine dem Betriebsflüssigkeitsbehälterinnenraum 2 zugewandte Innenschicht 45 und eine zwischen die Außenschicht 41 und die Innenschicht 45 angeordnete Haftschicht 44 aufweist. Die erste Elektrode 61 und die zweite Elektrode 62 des Messkondensators 60 sind zwischen der Außenschicht 41 und der Haftschicht 44 angeordnet. Die Seitenwand 20 weist ferner eine Abschirmschicht 42 und eine Isolationsschicht 43 auf, wobei die Abschirmschicht 42 zwischen der Außenschicht 41 und den ersten und zweiten Elektroden 61, 62 des Messkondensators 60 angeordnet ist. Die Isolationsschicht 43 wiederum ist zwischen der Abschirmschicht 42 und den ersten und zweiten Elektroden 61, 62 des Messkondensators 60 angeordnet.

Figur 3A zeigt einen Messkondensator 60 in Alleinstellung in seitlicher Draufsicht. Bei dem dargestellten Ausführungsbeispiel ist ersichtlich, dass die erste Elektrode 61 des Messkondensators 60 entlang ihrer Längenerstreckung L eine gleichmäßige Breitenerstreckung B aufweist. Die zweite Elektrode 62 des Messkondensators 60 hingegen weist eine sich entlang der Längenerstreckung der zweiten Elektrode 62 veränderte Breitenerstreckung B auf. Es ist ersichtlich, dass die Breite der zweiten Elektrode 62 entlang ihrer Längenerstreckung L eine sich in Richtung der Bodenwand 10 vergrößernde Breitenerstreckung B aufweist.

Figur 3B zeigt ein weiteres Beispiel eines Messkondensators 60 gemäß einer weiteren Ausführungsform des Betriebsflüssigkeitsbehälters 1. Es ist ersichtlich, dass sowohl die erste Elektrode 61 als auch die zweite Elektrode 62 jeweils in unterschiedlichen Höhen, d. h. in unterschiedlichen Positionen hinsichtlich der Längenerstreckung L der ersten und zweiten Elektroden 61, 62 jeweils zwei Flügel 63 aufweisen, die sich entlang der Breitenerstreckung B der ersten und zweiten Elektroden 61, 62 erstrecken. Es ist ersichtlich, dass die jeweiligen Flügel 63 abgerundet sind.

Figur 3C wiederum zeigt einen Messkondensator 60 eines Betriebsflüssigkeitsbehälters 1 gemäß einer weiteren Ausführungsform. Auch der in Figur 3C dargestellte Messkondensator 60 ist derart ausgebildet, dass sowohl die erste Elektrode 61 als auch die zweite Elektrode 62 jeweils zwei Flügel 63 aufweisen, die sich in der Breitenerstreckung B der jeweiligen Elektroden 61, 62 erstrecken. Die jeweiligen Flügel 63 sind dabei in unterschiedlichen Höhen der jeweiligen Elektroden 61, 62 angeordnet.

Die vorliegende Erfindung ist auf die in den Figuren 3A bis 3C dargestellten Ausgestaltungen des Messkondensators 60 jedoch nicht beschränkt, solange mittels des Messkondensators 60 ein elektrisches Feld erzeugt wird, dass sich in den Betriebsflüssigkeitsbehälterinnenraum 2 erstreckt, sodass die dielektrische Leitfähigkeit der Betriebsflüssigkeit 50 mittels der Auswerteeinrichtung 80 ermittelt werden kann.

### Bezugszeichenliste

- 1: Betriebsflüssigkeitsbehälter
- 2: Betriebsflüssigkeitsbehälterinnenraum
- 10: Bodenwand (des Betriebsflüssigkeitsbehälters)
- 11: Erhebung (der Bodenwand)
- 20: Seitenwand (des Betriebsflüssigkeitsbehälters)
- 30: Deckenwand
- 41: Außenschicht (der Bodenwand / der Seitenwand)
- 42: Abschirmschicht (der Bodenwand / der Seitenwand)
- 43: Isolationsschicht (der Bodenwand / der Seitenwand)
- 44: Haftschicht (der Bodenwand / der Seitenwand)
- 45: Innenschicht (der Bodenwand / der Seitenwand)
- 50: Betriebsflüssigkeit
- 60: Messkondensator
- 61: erste Elektrode (des Messkondensators) / erste Messelektrode
- 62: zweite Elektrode (des Messkondensators) / zweite Messelektrode
- 63: Flügel (der ersten Elektrode und/oder der zweiten Elektrode)
- 70: Referenzkondensator
- 71: erste Elektrode (des Referenzkondensators) / erste Referenzelektrode
- 72: zweite Elektrode (des Referenzkondensators) / zweite Referenzelektrode
- 80: Auswerteeinrichtung
- L: Längserstreckung (der Elektroden des Messkondensators)
- B: Breitenerstreckung (der Elektroden des Messkondensators)

## Patentansprüche

1. Betriebsflüssigkeitsbehälter (1), dessen Betriebsflüssigkeitsbehälterinnenraum (2) von einer Deckenwand (30), einer Bodenwand (10) und einer die Bodenwand (10) mit der Deckenwand (30) verbindenden Seitenwand (20) begrenzt ist, aufweisend:
- einen Referenzkondensator (70) mit einer ersten Elektrode (71) und einer zweiten Elektrode (72), die jeweils parallel zur Bodenwand (10) verlaufen;
- einen Messkondensator (60) mit einer ersten Elektrode (61) und einer zweiten Elektrode (62), die jeweils eine Längserstreckung (L), eine Breitenerstreckung (B) und eine Tiefenerstreckung aufweisen und jeweils derart parallel zur Seitenwand (20) verlaufen, dass die Längserstreckungen (L) der ersten Elektrode (61) und der zweiten Elektrode (62) von der Bodenwand (10) in Richtung der Deckenwand (30) verlaufen;
- eine mit dem Referenzkondensator (70) und dem Messkondensator (60) elektrisch verbundene Auswerteeinrichtung (80) zur Bestimmung eines Füllstandes des Betriebsflüssigkeitsbehälters (1) mittels von dem Referenzkondensator (70) und dem Messkondensator (60) ermittelten Messsignalen, wobei
- die erste Elektrode (71) und die zweite Elektrode (72) des Referenzkondensators (70) in der Bodenwand (10) eingebettet sind; und
- die erste Elektrode (61) und die zweite Elektrode (62) des Messkondensators (60) in der Seitenwand (20) eingebettet sind, wobei der Betriebsflüssigkeitsbehälter (1) durch die folgenden Merkmale gekennzeichnet ist: die Bodenwand (10) weist eine sich in den Betriebsflüssigkeitsbehälterinnenraum (2) erstreckende Erhebung (11) auf; und die erste Elektrode (71) und die zweite Elektrode (72) des Referenzkondensators (70) sind in der Erhebung (11) der Bodenwand (10) befestigt.

2. Betriebsflüssigkeitsbehälter (1) nach Anspruch 1, **gekennzeichnet durch** folgendes Merkmal:
- zumindest eine der ersten und zweiten Elektroden (61, 62) des Messkondensators (60) weisen entlang ihrer Längserstreckung (L) eine ungleichmäßige Breitenerstreckung (B) auf.

3. Betriebsflüssigkeitsbehälter (1) nach Anspruch 1, **gekennzeichnet durch** die folgenden Merkmale:
- die Seitenwand (20) weist eine Außenschicht (41), eine dem Betriebsflüssigkeitsbehälterinnenraum (2) zugewandte Innenschicht (45) und eine zwischen diese angeordnete Haftschicht (44) auf;
- die erste Elektrode (61) und die zweite Elektrode (62) des Messkondensators (60) sind zwischen der Außenschicht (41) und der Haftschicht (44) angeordnet.

4. Betriebsflüssigkeitsbehälter (1) nach Anspruch 1, **gekennzeichnet durch** die folgenden Merkmale:
- die Bodenwand (10) weist eine Außenschicht (41), eine dem Betriebsflüssigkeitsbehälterinnenraum (2) zugewandte Innenschicht (45) und eine zwischen diese angeordnete Haftschicht (44) auf;
- die erste Elektrode (71) und die zweite Elektrode (72) des Referenzkondensators (70) sind zwischen der Außenschicht (41) und der Haftschicht (44) angeordnet.

5. Betriebsflüssigkeitsbehälter (1) nach Anspruch 3 oder 4, **dadurch gekennzeichnet,**
- die Seitenwand (20) und/oder die Bodenwand (10) weisen eine Abschirmschicht (42) und eine Isolationsschicht (43) auf;
- die Abschirmschicht (42) ist zwischen der Außenschicht (41) und der ersten und zweiten Elektroden (61, 62; 71, 72) angeordnet; und
- die Isolationsschicht (43) ist zwischen der Abschirmschicht (42) und den ersten und zweiten Elektroden (61, 62; 71, 72) angeordnet.

6. Betriebsflüssigkeitsbehälter (1) nach Anspruch 5, **dadurch gekennzeichnet, dass** die Isolationsschicht (43) die gleiche dielektrische Leitfähigkeit wie die Innenschicht (45) und/oder die Außenschicht (41) aufweist.

7. Betriebsflüssigkeitsbehälter (1) nach einem der vorhergehenden Ansprüche, **dadurch gekennzeichnet, dass** ein Abstand der ersten und zweiten Elektroden (61, 62; 71, 72) zu dem Betriebsflüssigkeitsbehälterinnenraum zwischen 1,5 mm und 3,5 mm beträgt.

8. Betriebsflüssigkeitsbehälter (1) nach einem der vorhergehenden Ansprüche, **dadurch gekennzeichnet, dass** zumindest einer der ersten und zweiten Elektroden (61, 62) des Messkondensators (60) entlang ihrer Längserstreckung (L) eine sich in Richtung der Bodenwand (10) vergrößernde Breitenerstreckung (B) aufweist.

9. Betriebsflüssigkeitsbehälter (1) nach einem der vorhergehenden Ansprüche, **dadurch gekennzeichnet, dass** der Betriebsflüssigkeitsbehälter (1) mehrere Messkondensatoren (60) aufweist, die an einer Seitenwand (20) oder an mehreren Seitenwänden (20) befestigt sind.

## Claims

1. Operating liquid container (1), the inner space (2) of which is defined by a covering wall (30), a bottom wall (10) and a side stall (20) connecting the bottom wall (10) to the covering wall (30), comprising;
- a reference capacitor (70) comprising a first electrode (71) and a second electrode (72), which both extend parallel to the bottom wall (10);
- a measuring capacitor (60) comprising a first electrode (61) and a second electrode (62), which both have a length extension (L), a width extension (B) and a depth extension, and both extend parallel to the side wall (20) in such a way that the length extensions (I,) of the first electrode (61) and the second electrode (62) extend from the bottom wall (10) towards the covering wall (30);
- an evaluation device (80) electrically connecting to the reference capacitor (70) and the measuring capacitor (60), for determining a filling level of the operating liquid container (1) by means of measuring signals determined by the reference capacitor (70) and the measuring capacitor (60),
- wherein the first electrode (71) and the second electrode (72) of the reference capacitor (70) are embedded in the bottom wall (10); and
- the first electrode (61) and the second electrode (62) of the measuring capacitor (60) are embedded in the side wall (20) ;
wherein the operating liquid container (1) is **characterized in that:**
- the bottom wall (10) has an elevation (11) which extends into the inner space (2) of the operating liquid container (1); and
- the first electrode (71) and the second electrode (72) of the measuring capacitor (70) are embedded in the elevation (11) of the bottom wall (10).

2. Operating liquid container (1) according to claim 1, **characterized in that** at least one of the first and second electrodes (61, 62) of the measuring capacitor (60) has an uneven width extension (B) along its length extension (L).

3. Operating liquid container (1) according to claim 1, **characterized by the following features:**
- the side wall (20) comprises an outer layer (41), an inner layer (45) facing the inner space (2) of the operating liquid container (1) and a bonding layer (44) arranged in between;
- the first electrode (61) and the second electrode (62) of the measuring capacitor (60) are arranged between the outer layer (41) and the bonding layer (44).

4. Operating liquid container (1) according to claim 1, **characterized by the following features:**
- the bottom wall (10) comprises an outer layer (41), an inner layer (45) facing the inner space (2) of the operating liquid container (1), and a bonding layer (44) arranged in between;
- the first electrode (71) and the second electrode (72) of the reference capacitor (70) are arranged between the outer layer (41) and the bonding layer (44).

5. Operating liquid container (1) according to claim 3 or claim 4, **characterized by the following features:**
- the side wall (20) and/or the bottom wall (10) comprise a shielding layer (42) and an insulating layer (43);
- the shielding layer (42) is arranged between the outer layer (41) and the first and second electrodes (61, 62; 71, 72); and
- the insulating layer (43) is arranged between the shielding layer (42) and the first and second electrodes (61, 62; 71, 72) .

6. Operating liquid container (1) according to claim 5, **characterized in that** the insulating layer (43) has the same dielectric conductivity as the inner layer (45) and/or the outer layer (41) .

7. Operating liquid container (1) according to one of the preceding claims, **characterized in that** a distance of the first and second electrodes (61, 62; 71, 72) to the inner space (2) of the operating liquid container (1) is between 1.5 mm and 3.5 mm.

8. Operating liquid container (1) according to one of the preceding claims, **characterized in that** at least one of the first and second electrodes (61, 62) of the measuring capacitor (60) has a width extension (B) which increases along its length extension (L) in the direction of the bottom wall (10).

9. Operating liquid container (1) according to one of the preceding claims, **characterized in that** the operating liquid container (1) has a plurality of measuring capacitors (60) which are fastened to a side wall (20) or to a plurality of side walls (20) .

## Revendications

1. Réservoir de liquide de fonctionnement (1) dont l'espace intérieur de réservoir de liquide de fonctionnement (2) est délimité par une paroi supérieure (30), une paroi inférieure (10) et une paroi latérale (20) reliant la paroi inférieure (10) à la paroi supérieure (30), présentant :
- un condensateur de référence (70) comportant une première électrode (71) et une seconde électrode (72), lesquelles s'étendent respectivement parallèlement à la paroi inférieure (10) ;
- un condensateur de mesure (60) comportant une première électrode (61) et une seconde électrode (62), lesquelles présentent respectivement une extension longitudinale (L), une extension en largeur (B) et une extension de profondeur et s'étendent respectivement parallèlement à la paroi latérale (20) de telle sorte que les extensions longitudinales (L) de la première électrode (61) et de la seconde électrode (62) s'étendent depuis la paroi inférieure (10) en direction de la paroi supérieure (30) ;
- un dispositif d'évaluation (80) relié électriquement au condensateur de référence (70) et au condensateur de mesure (60), lequel dispositif d'évaluation permet de déterminer un niveau de remplissage du réservoir de liquide de fonctionnement (1) à l'aide de signaux de mesure détectés par le condensateur de référence (70) et le condensateur de mesure (60), dans lequel
- la première électrode (71) et la seconde électrode (72) du condensateur de référence (70) sont incorporées dans la paroi inférieure (10) ; et
- la première électrode (61) et la seconde électrode (62) du condensateur de mesure (60) sont incorporées dans la paroi latérale (20), dans lequel le réservoir de liquide de fonctionnement (1) est **caractérisé par** les caractéristiques suivantes : la paroi inférieure (10) présente une saillie (11) s'étendant dans l'espace intérieur de réservoir de liquide de fonctionnement (2) ; et la première électrode (71) et la seconde électrode (72) du condensateur de référence (70) sont fixées dans la saillie (11) de la paroi inférieure (10).

2. Réservoir de liquide de fonctionnement (1) selon la revendication 1, **caractérisé par** la caractéristique suivante :
- au moins l'une parmi les première et seconde électrodes (61, 62) du condensateur de mesure (60) présente une extension en largeur (B) irrégulière le long de son extension longitudinale (L).

3. Réservoir de liquide de fonctionnement (1) selon la revendication 1, **caractérisé par** les caractéristiques suivantes :
- la paroi latérale (20) présente une couche externe (41), une couche interne (45) tournée vers l'espace intérieur de réservoir de liquide de fonctionnement (2) et une couche adhésive (44) disposée entre celles-ci ;
- la première électrode (61) et la seconde électrode (62) du condensateur de mesure (60) sont disposées entre la couche externe (41) et la couche adhésive (44).

4. Réservoir de liquide de fonctionnement (1) selon la revendication 1, **caractérisé par** les caractéristiques suivantes :
- la paroi inférieure (10) présente une couche externe (41), une couche interne (45) tournée vers l'espace intérieur de réservoir de liquide de fonctionnement (2) et une couche adhésive (44) disposée entre celles-ci ;
- la première électrode (71) et la seconde électrode (72) du condensateur de référence (70) sont disposées entre la couche externe (41) et la couche adhésive (44).

5. Réservoir de liquide de fonctionnement (1) selon la revendication 3 ou 4, **caractérisé en ce que**
- la paroi latérale (20) et/ou la paroi inférieure (10) présentent une couche de blindage (42) et une couche d'isolation (43) ;
- la couche de blindage (42) est disposée entre la couche externe (41) et les première et seconde électrodes (61, 62 ; 71, 72) ; et
- la couche d'isolation (43) est disposée entre la couche de blindage (42) et les première et seconde électrodes (61, 62 ; 71, 72).

6. Réservoir de liquide de fonctionnement (1) selon la revendication 5, **caractérisé en ce que** la couche d'isolation (43) présente la même conductibilité diélectrique que la couche interne (45) et/ou la couche externe (41).

7. Réservoir de liquide de fonctionnement (1) selon l'une des revendications précédentes, **caractérisé en ce qu'**une distance entre les première et seconde électrodes (61, 62 ; 71, 72) et l'espace intérieur de réservoir de liquide de fonctionnement est comprise entre 1,5 mm et 3,5 mm.

8. Réservoir de liquide de fonctionnement (1) selon l'une des revendications précédentes, **caractérisé en ce qu'**au moins l'une parmi les première et seconde électrodes (61, 62) du condensateur de mesure (60) présente, le long de son extension longitudinale (L), une extension en largeur (B) croissante en direction de la paroi inférieure (10).

9. Réservoir de liquide de fonctionnement (1) selon l'une des revendications précédentes, **caractérisé en ce que** le réservoir de liquide de fonctionnement (1) présente plusieurs condensateurs de mesure (60) qui sont fixés sur une paroi latérale (20) ou sur plusieurs parois latérales (20).
